# EUROPÄISCHE PATENTSCHRIFT

(11) **EP 1 580 798 B1**
(45) Veröffentlichungstag und Bekanntmachung des Hinweises auf die Patenterteilung: **21.12.2016**
(21) Anmeldenummer: 05004049.2
(22) Anmeldetag: 24.02.2005
(51) Int. Cl.: H01J 61/44, C09K 11/77, C09K 11/74

(54) **QUECKSILBER-NIEDERDRUCKENTLADUNGSLAMPE FÜR DIE PFLANZENBELEUCHTUNG**
LOW PRESSURE MERCURY DISCHARGE LAMP FOR ILLUMINATING PLANTS
LAMPE À DÉCHARGE À VAPEUR DE MERCURE BASSE PRESSION POUR ILLUMINATION DES VEGETAUX VIVANTS

(30) Priorität: 22.03.2004 DE 102004013915
(43) Veröffentlichungstag der Anmeldung: 28.09.2005
(73) Patentinhaber: OSRAM GmbH, 80807 München (DE)
(72) Erfinder: Meiss, Dieter, Dr., 86391 Stadtbergen (DE); Schiplage, Matthias, 86368 Gersthofen (DE); Zachau, Martin, Dr., 82269 Geltendorf (DE)
(74) Vertreter: Nordmeyer, Philipp Werner

(56) Entgegenhaltungen:
- DE-A1- 10 122 850
- US-A1- 2003 076 029

## Beschreibung

### Technisches Gebiet

Die Erfindung geht aus von Quecksilber-Niederdruckentladungslampe für die Pflanzenbeleuchtung mit einem rohrförmigen Entladungsgefäß, zwei in die Enden des Entladungsgefäßes gasdicht eingeschmolzene Elektroden, einer Füllung aus zumindest einem Edelgas und Quecksilber sowie einer Leuchtstoffbeschichtung auf der Innenwand des Gefäßes, wobei die Leuchtstoffbeschichtung zumindest einen mit Europium dotierten Bariummagnesiumaluminat-Leuchtstoff vom Typ BaMgAl₁₀O₁₇:Eu und einen mit Cer und Mangan dotierten Gadoliniumzinkmagnesiumpentaborat-Leuchtstoff vom Typ Gd(Zn,Mg)B₅O₁₀:Ce,Mn aufweist.

### Stand der Technik

Bisher werden bei OSRAM für die Pflanzenbeleuchtung Quecksilber-Niederdruckentladungslampen in Form von Leuchtstofflampen verwendet, die eine Leuchtstoffbeschichtung aus den beiden oben aufgeführten Leuchtstoffen BaMgAl₁₀O₁₇:Eu und Gd(Zn,Mg)B₅O₁₀:Ce,Mn sowie einem mit Zinn dotierten Strontiummagnesiumorthophosphat-Leuchtstoff vom Typ (Sr,Mg)₃(PO₄)₂:Sn im Verhältnis von ungefähr 22 Gew.% : 17 Gew.% : 61 Gew.% besitzen. Die Verwendung des Leuchtstoffs (Sr,Mg)₃(Po₄)₂:Sn hat jedoch zwei Nachteile:
1. Die Korngröße des (Sr,Mg)₃(Po₄)₂:Sn - Leuchtstoffs ist wesentlich größer als die der beiden anderen Leuchtstoffe. Dies führt zu einem großen Farbgradienten entlang der Lampe, insbesondere bei langen Lampen mit hoher Wattstufe größer 36W.
2. Die Zinndotierung des (Sr,Mg)₃(PO₄)₂:Sn führt zu einem hohen Quecksilberverbrauch, der bei T8-Leuchtstofflampen mit einem Rohrdurchmesser von 26 mm mehr als das Doppelte aller übrigen T8-Leuchtstofflampentypen beträgt, z.B. 3.5 mg in 2000h bei einer Leuchtstofflampe mit einer Leistungsaufnahme von 58 W. Zusätzlich führt dies zu einer starken Vergrauung und damit US 2003/0076029 offenbart eine Leuchtstofflampe mit einer Leuchtstoffbeschichtung die BaMgAl10O17:Eu 6.1 Gew. %, (Ce, Gd) (Zn, Mg)B5010:Mn Gew.28.5%, Ca5(P04)3(F, CI):Sb, Mn 26.9 Gew. %, Sr4Al14O25:Eu 28.5 Gew.%, CeMgAl11O19:Tb 10.0 Gew.% aufweist.

### Darstellung der Erfindung

Es ist daher Aufgabe der vorliegenden Erfindung eine Quecksilber-Niederdruckentladungslampe mit einer neuen Leuchtstoffzusammensetzung für die Pflanzenbeleuchtung zu finden, die die oben aufgeführten Nachteile vermeidet.

Die Aufgabe wird gelöst durch eine Leuchtstofflampe für die Pflanzenbeleuchtung mit einem rohrförmigen Entladungsgefäß, zwei in die Enden des Entladungsgefäßes gasdicht eingeschmolzenen Elektroden, einer Füllung aus zumindest einem Edelgas und Quecksilber sowie einer Leuchtstoffbeschichtung auf der Innenwand des Gefäßes, wobei zur Erzeugung von Licht mit einer möglichst hohen Lichtausbeute und einer Farbtemperatur zwischen 4000 und 5500 K die Leuchtstoffbeschichtung neben einem mit Europium dotierten Bariummagnesiumaluminat-Leuchtstoff vom Typ BaMgAl₁₀O₁₇:Eu und einem mit Cer und Mangan dotierten Gadoliniumzinkmagnesiumpentaborat-Leuchtstoff vom Typ Gd(Zn,Mg)B₅O₁₀:Ce,Mn zusätzlich einen mit Antimon und Mangan dotierten Kalziumhalophosphat-Leuchtstoff vom Typ Ca₁₀(PO₄)₆(F,Cl)₂:Sb,Mn aufweist.

Besonders gute Ergebnisse in Hinblick auf Lichtausbeute und die Farbwiedergabewerden werden dabei erzielt, wenn der BaMgAl₁₀O₁₇:Eu - Leuchtstoff einen Anteil zwischen 15 und 35 Gew.%, vorteilhaft zwischen 20 und 30 Gew.%, der Gd(Zn,Mg)B₅O₁₀:Ce,Mn - Leuchtstoff einen Anteil zwischen 25 und 45 Gew.%, vorteilhaft zwischen 30 und 40 Gew.%, und der Ca₁₀(PO₄)₆(F,Cl)₂:Sb,Mn - Leuchtstoff einen Anteil zwischen 30 und 50 Gew.%, vorteilhaft zwischen 35 und 45 Gew.%, an der Leuchtstoffbeschichtung der Lampe aufweist.

Die Leuchtstoffbeschichtung mit dem BaMgAl₁₀O₁₇:Eu - Leuchtstoff, dem Gd(Zn,Mg)B₅O₁₀:Ce,Mn - Leuchtstoff und dem Ca₁₀(PO₄)₆(F,Cl)₂:Sb,Mn - Leuchtstoff kann dabei in einer Schicht aufgebracht sein. Es ist aber auch denkbar, die einzelnen Leuchtstoffe in jeweils einer eigenen Schicht auf der Innenwand des Lampengefäßes aufzubringen.

### Kurze Beschreibung der Zeichnungen

Im Folgenden soll die Erfindung anhand von Graphiken näher erläutert werden:
- Figur 1: zeigt die Lichtausbeute (nach 100 Stunden Brenndauer) für eine Leuchtstofflampe mit einer Leistungsaufnahme von 58 W mit der bisher verwendeten Leuchtstoffzusammensetzung B und der neuen erfindungsgemäßen Leuchtstoffzusammensetzung A.
- Figur 2: zeigt die Höhe der Pflanzenindizes für die Photosynthese SY, die Chlorophyllsynthese CH und den Phototropismus TP für eine Leuchtstofflampe mit einer Leistungsaufnahme von 58 W mit der bisher verwendeten Leuchtstoffzusammensetzung B und der neuen erfindungsgemäßen Leuchtstoffzusammensetzung A.
- Figur 3: zeigt die Höhe der Farbwidergabeindizes Ra8 und Ra15 für eine Leuchtstofflampe mit einer Leistungsaufnahme von 58 W mit der bisher verwendeten Leuchtstoffzusammensetzung B und der neuen erfindungsgemäßen Leuchtstoffzusammensetzung A.

### Bevorzugte Ausführung der Erfindung

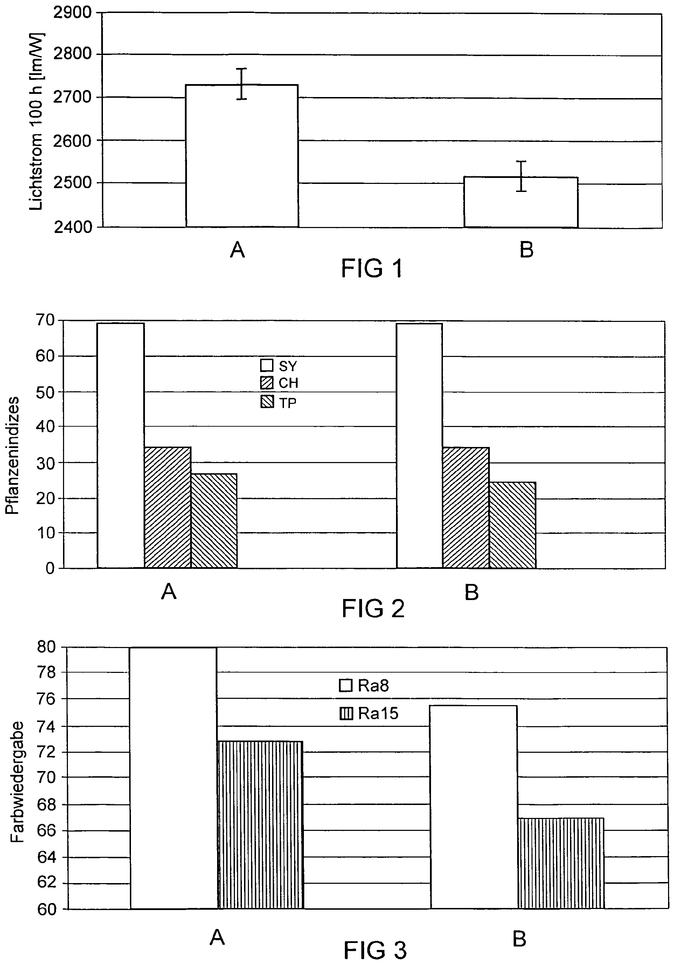

Es wurde eine erfindungsgemäße Leuchtstofflampe mit einer optimalen Leuchtstoffbeschichtung A bestehend aus 25 Gew.% BaMgAl₁₀O₁₇:Eu - Leuchtstoff, aus 34 Gew.% Gd(Zn,Mg)B₅O₁₀:Ce,Mn - Leuchtstoff und aus 41 Gew.% Ca₁₀(PO₄)₆(F,Cl)₂:Sb,Mn - Leuchtstoff untersucht. Die lichttechnischen Messungen ergaben folgende Verbesserungen gegenüber den Lampen mit der bisher verwendeten Leuchtstoffbeschichtung B aus den Leuchtstoffen BaMgAl₁₀O₁₇:EU, Gd(Zn,Mg)B₅O₁₀:Ce,Mn sowie (Sr_{0.9}Mg_{0.1})₃(Po₄)₂:Sn im Verhältnis von 22 Gw.% : 17 Gew.% : 61 Gw.%. Die Ergebnisse sind in den Figuren 1 bis 3 aufgeführt:
1. Die Lichtausbeute der Lampen mit der neuen Leuchtstoffzusammensetzung A ist um 10 % höher als die Lichtausbeute der Lampen mit der bisherigen Leuchtstoffzusammensetzung B.
2. Der für das Pflanzenwachstum gemäß DIN 5031-10 von 1979 wesentliche Pflanzenindex CH für die Chlorophyllsynthese ist bei beiden Leuchtstoffzusammensetzung nahezu gleich; bei der Photosynthese SY und dem Phototropismus TP gemäß DIN 5031-10 von 1979 ergibt sich für die neue Leuchtstoffzusammensetzung A eine leichte Erhöhung der Indizes.
3. Der Farbwiedergabeindex R8 steigt für die neue Leuchtstoffzusammensetzung A von 75 auf 80 und der R15 von 67 auf knapp 73 und erfüllt damit Farbwiedergabestufe 1 b.
4. Das Leuchtstoffschichtgewicht beträgt bei der Leuchtstofflampe mit der neuen Leuchtstoffzusammensetzung 3.7g anstatt 4.5g bei der alten Leuchtstoffzusammensetzung und ist somit um 18 % geringer. Damit werden die höheren Kosten der neuen Leuchtstoffmischung mehr als kompensiert.

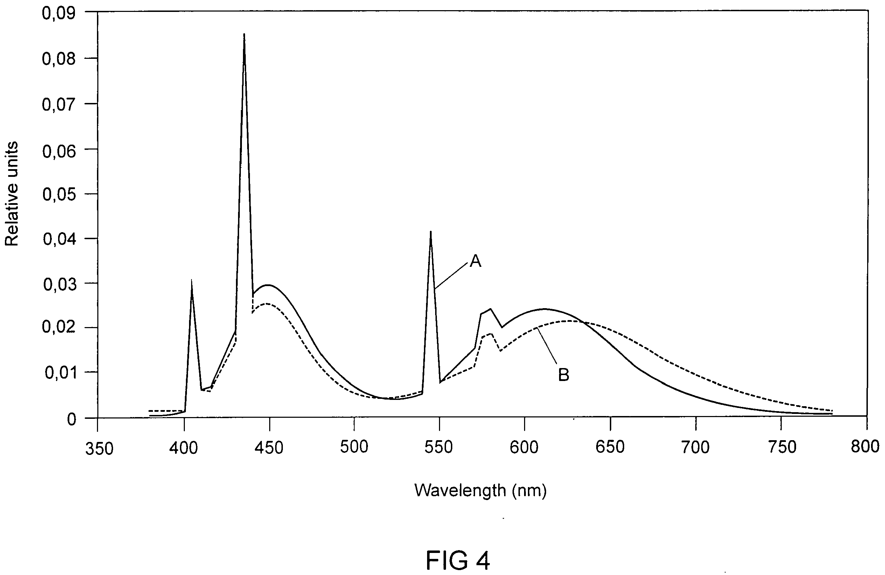

In Figur 4 ist das Emissionsspektrum einer Leuchtstofflampe mit der bisher verwendeten Leuchtstoffbeschichtung B und einer Leuchtstofflampe mit der neuen erfindungsgemäßen Leuchtstoffbeschichtung A in relativen Einheiten in Abhängigkeit von der Wellenlänge in nm aufgezeigt. Beide Spektren sind auf die gleiche Fläche normiert. Der Farbort der beiden Leuchtstoffbeschichtungen ist gleich und liegt bei x/y = 0.338/0.243. Die Farbtemperatur beträgt 4700 K.

Durch die Verwendung des Kalzium-Halophosphat-Leuchtstoffs vom Typ Ca₁₀(PO₄)₆(F,Cl)₂:Sb,Mn anstelle des mit Zinn dotierten Strontiummagnesiumorthophosphat-Leuchtstoffs vom Typ (Sr,Mg)₃(Po₄)₂:Sn wird eine bessere Angleichung der Korngröße der in der Leuchtstoffmischung verwendeten Leuchtstoffe erreicht. Dies führt einerseits zu einer gleichmäßigeren Mischung der Leuchtstoffe in der Beschichtung und andererseits zu einer Reduzierung des Farbgradienten.

## Patentansprüche

1. Leuchtstofflampe für die Pflanzenbeleuchtung mit einem rohrförmigen Entladungsgefäß, zwei in die Enden des Entladungsgefäßes gasdicht eingeschmolzenen Elektroden, einer Füllung aus zumindest einem Edelgas und Quecksilber sowie einer Leuchtstoffbeschichtung auf der Innenwand des Gefäßes, wobei die Leuchtstoffbeschichtung aus einem mit Europium dotierten Bariummagnesiumaluminat-Leuchtstoff vom Typ BaMgAl₁₀O₁₇:Eu und einem mit Cer und Mangan dotierten Gadoliniumzinkmagnesiumpentaborat-Leuchtstoff vom Typ Gd(Zn,Mg)B₅O₁₀:Ce,Mn , sowie zur Erzeugung von Licht mit einer möglichst hohen Lichtausbeute und einer Farbtemperatur zwischen 4000 und 5500 K einem mit Antimon und Mangan dotierten Kalziumhalophosphat-Leuchtstoff vom Typ Ca₁₀(PO₄)₆(F,Cl)₂:Sb,Mn besteht.

2. Leuchtstofflampe nach Anspruch 1, **dadurch gekennzeichnet, dass** der BaMgAl₁₀O₁₇:Eu - Leuchtstoff einen Anteil zwischen 15 und 35 Gew.% an der Leuchtstoffbeschichtung der Lampe aufweist.

3. Leuchtstofflampe nach Anspruch 1, **dadurch gekennzeichnet, dass** der BaMgAl₁₀O₁₇:Eu - Leuchtstoff einen Anteil zwischen 20 und 30 Gew.% an der Leuchtstoffbeschichtung der Lampe aufweist.

4. Leuchtstofflampe nach Anspruch 1, **dadurch gekennzeichnet, dass** der Gd(Zn,Mg)B₅O₁₀:Ce,Mn - Leuchtstoff einen Anteil zwischen 25 und 45 Gew.% an der Leuchtstoffbeschichtung der Lampe aufweist.

5. Leuchtstofflampe nach Anspruch 1, **dadurch gekennzeichnet, dass** der Gd(Zn,Mg)B₅O₁₀:Ce,Mn - Leuchtstoff einen Anteil zwischen 30 und 40 Gew.% an der Leuchtstoffbeschichtung der Lampe aufweist.

6. Leuchtstofflampe nach Anspruch 1, **dadurch gekennzeichnet, dass** der Ca₁₀(PO₄)₆(F,Cl)₂:Sb,Mn - Leuchtstoff einen Anteil zwischen 30 und 50 Gew.% an der Leuchtstoffbeschichtung der Lampe aufweist.

7. Leuchtstofflampe nach Anspruch 1, **dadurch gekennzeichnet, dass** der Ca₁₀(PO₄)₆(F,Cl)₂:Sb,Mn - Leuchtstoff einen Anteil zwischen 35 und 45 Gew.% an der Leuchtstoffbeschichtung der Lampe aufweist.

8. Leuchtstofflampe nach Anspruch 1, **dadurch gekennzeichnet, dass** die Leuchtstoffbeschichtung in einer Schicht aufgebracht ist.

9. Leuchtstofflampe nach Anspruch 1, **dadurch gekennzeichnet, dass** die Leuchtstoffbeschichtung in mehreren Schichten aufgebracht ist.

## Claims

1. Fluorescent lamp for plant lighting, having a tubular discharge vessel, two electrodes melted into the ends of the discharge vessels so as to be gas-tight, a filling comprising at least one noble gas and mercury as well as a phosphor coating on the inner wall of the vessel, wherein the phosphor coating consists of a europium-doped barium magnesium aluminate phosphor of the BaMgAl₁₀O₁₇:Eu type and a cerium- and manganese-doped gadolinium zinc magnesium pentaborate phosphor of the Gd(Zn, Mg)B₅O₁₀:Ce,Mn type, and, for generating light with an optimally high light output and a colour temperature between 4,000 and 5,500 K, an antimony-and manganese-doped calcium halophosphate phosphor of the Ca₁₀(PO₄)₆(F, Cl)₂:Sb,Mn type.

2. Fluorescent lamp according to claim 1, **characterised in that** the BaMgAl₁₀O₁₇:Eu phosphor fraction is between 15 and 35% by weight of the phosphor coating of the lamp.

3. Fluorescent lamp according to claim 1, **characterised in that** the BaMgAl₁₀O₁₇:Eu phosphor fraction is between 20 and 30% by weight of the phosphor coating of the lamp.

4. Fluorescent lamp according to claim 1, **characterised in that** the Gd(Zn, Mg)B₅O₁₀:Ce,Mn phosphor fraction is between 25 and 45% by weight of the phosphor coating of the lamp.

5. Fluorescent lamp according to claim 1, **characterised in that** the Gd(Zn, Mg)B₅O₁₀:Ce,Mn phosphor fraction is between 30 and 40% by weight of the phosphor coating of the lamp.

6. Fluorescent lamp according to claim 1, **characterised in that** the Ca₁₀(PO₄)₆(F, Cl)₂:Sb,Mn phosphor fraction is between 30 and 50% by weight of the phosphor coating of the lamp.

7. Fluorescent lamp according to claim 1, **characterised in that** the Ca₁₀(PO₄)₆(F, Cl)₂:Sb,Mn phosphor fraction is between 35 and 45% by weight of the phosphor coating of the lamp.

8. Fluorescent lamp according to claim 1, **characterised in that** the phosphor coating is applied in one layer.

9. Fluorescent lamp according to claim 1, **characterised in that** the phosphor coating is applied in a plurality of layers.

## Revendications

1. Tube fluorescent pour l'éclairage de plantes avec un réceptacle de décharge tubulaire, deux électrodes scellées de manière étanche aux gaz aux extrémités du réceptacle de décharge, une charge formée d'au moins un gaz rare et de mercure ainsi qu'un revêtement fluorescent sur la paroi interne du réceptacle, dans lequel le revêtement fluorescent est constitué d'un luminophore d'aluminate de baryum-magnésium dopé à l'europium du type BaMgAl₁₀O₁₇:Eu et d'un luminophore de pentaborate de gadolinium-zink-magnésium dopé au cérium et au manganèse du type Gd(Zn,Mg)B₅O₁₀:Ce,Mn, ainsi que pour la production de lumière avec un rendement lumineux le plus élevé possible et une température de couleur de 4000 à 5500 K à partir d'un luminophore d'halophosphate de calcium dopé à l'antimoine et au manganèse du type Ca₁₀(PO₄)₆(F,Cl)₂:Sb,Mn.

2. Tube fluorescent selon la revendication 1, **caractérisé en ce que** le luminophore BaMgAl₁₀O₁₇:Eu présente une fraction de 15 à 35 % en poids du revêtement fluorescent du tube.

3. Tube fluorescent selon la revendication 1, **caractérisé en ce que** le luminophore BaMgAl₁₀O₁₇:Eu présente une fraction de 20 à 30 % en poids du revêtement fluorescent du tube.

4. Tube fluorescent selon la revendication 1, **caractérisé en ce que** le luminophore Gd(Zn,Mg)B₅O₁₀:Ce,Mn présente une fraction de 25 à 45 % en poids du revêtement fluorescent du tube.

5. Tube fluorescent selon la revendication 1, **caractérisé en ce que** le luminophore Gd(Zn,Mg)B₅O₁₀:Ce,Mn présente une fraction de 30 à 40 % en poids du revêtement fluorescent du tube.

6. Tube fluorescent selon la revendication 1, **caractérisé en ce que** le luminophore Ca₁₀(PO₄)₆(F,Cl)₂:Sb,Mn présente une fraction de 30 à 50 % en poids du revêtement fluorescent du tube.

7. Tube fluorescent selon la revendication 1, **caractérisé en ce que** le luminophore Ca₁₀(PO₄)₆(F,Cl)₂:Sb,Mn présente une fraction de 35 à 45 % en poids du revêtement fluorescent du tube.

8. Tube fluorescent selon la revendication 1, **caractérisé en ce que** le revêtement fluorescent est appliqué en une couche.

9. Tube fluorescent selon la revendication 1, **caractérisé en ce que** le revêtement fluorescent est appliqué en plusieurs couches.
